# EUROPÄISCHE PATENTSCHRIFT

(11) **EP 1 916 357 B1**
(45) Veröffentlichungstag und Bekanntmachung des Hinweises auf die Patenterteilung: **15.09.2010**
(21) Anmeldenummer: 07019113.5
(22) Anmeldetag: 28.09.2007
(51) Int. Cl.: E04F 15/024, H02G 3/38

(54) **Höhenverstellbares Stützelement**
Height adjustable supporting element
Elément support reglable en hauteur

(30) Priorität: 20.10.2006 DE 102006050976
(43) Veröffentlichungstag der Anmeldung: 30.04.2008
(73) Patentinhaber: OBO Bettermann GmbH & Co. KG, 58710 Menden (DE)
(72) Erfinder: Kaulke, Lothar, 51645 Gummersbach (DE); Raschke, Jörg, 51674 Wiehl (DE)
(74) Vertreter: Patentanwälte Ruff, Wilhelm, Beier, Dauster & Partner

(56) Entgegenhaltungen:
- DE-U1-202005 009 887
- FR-A- 2 528 482
- FR-A- 2 559 528
- US-A1- 2003 131 766
- US-A1- 2004 035 064

## Beschreibung

Die Erfindung betrifft ein Stützelement, insbesondere für das Abstützen von Deckelelementen in den Mittelbereichen von estrichbündigen Kanälen, bestehend aus wenigstens einem ersten und einem zweiten Stützelement-Teil, wobei das erste Stützelement-Teil wenigstens zwei Ausnehmungen aufweist, in denen jeweils das zweite Stützelement-Teil wenigstens abschnittsweise aufnehmbar ist, wobei das Stützelement bei Positionierung des zweiten Stützelement-Teils in einer ersten der Ausnehmungen eine erste Gesamtlänge und bei Positionierung des zweiten Stützelement-Teils in einer zweiten der Ausnehmungen eine zweite Gesamtlänge aufweist.

Stützelemente dieser Art sind beispielsweise aus dem deutschen Gebrauchsmuster DE 89 01 819 U1 bekannt. Darin ist eine Spindel in einem Rohr aufgenommen. Eine Höhenverstellung der Stütze erfolgt, indem eine Mutter verdreht wird, die mit der Spindel in Eingriff steht und die an einer Kante im Endbereich des Rohrs anliegt, so dass die Spindel in das Rohr hinein oder aus dem Rohr heraus bewegt wird. Der Stützhöhenbereich der Stütze, also der Abstand zwischen minimaler und maximaler Höhe der Stütze, ist durch die Länge der Spindel und des Rohrs begrenzt.

In der französischen Offenlegungsschrift FR 2 559 528 A1 ist eine höhenverstellbare Stütze beschrieben, beispielsweise für Doppelböden. Die Stütze weist einen Stützkopf, eine Stellmutter sowie einen Sockel auf. An dem Stützkopf ist ein nach unten abragendes Gewinde vorgesehen, das mit dem Gewinde der Stellmutter in Eingriff gebracht ist. Der Sockel weist eine runde Auflagefläche auf, auf der ein Gegenstück aufliegt, das an der Stellmutter vorgesehen ist. Je nachdem, wie die Stellmutter ausgerichtet ist, ergeben sich unterschiedliche Gesamtlängenausdehnungen der Stütze. Erreicht wird dies, indem das Gegenstück in nur einem Endbereich der Stellmutter vorgesehen ist, so dass die Stellmutter durch Rotieren der Stellmutter um 180° um eine Achse senkrecht zur Mittellängsachse vom Sockel aufragt oder beinahe vollständig darin aufgenommen ist.

Die französische Offenlegungsschrift FR 2 528 482 A1 beschreibt ebenfalls eine Stütze. Die Stütze weist ein Bodenelement, eine Stützhülse sowie eine Aufnahmescheibe auf. Das Bodenelement ist mit drei Abschnitten versehen, deren Oberfläche mit treppenartig angeordneten Stufen versehen ist. Die Stufen weisen in ihren Mittelbereichen Ausnehmungen auf. Die Stützhülse ist in ihrem Inneren mit Strebebögen versehen, die in ihren unteren Endbereichen Vorsprünge aufweisen. Diese Vorsprünge sind mit Zentrierzapfen für den Eingriff mit den Ausnehmungen versehen. Die Stütze erreicht je nach Relativposition der Stützhülse zum Bodenelement verschiedene Gesamthöhen.

In der US Offenlegungsschrift US 2004/0,035,064 A1 ist eine Stützvorrichtung für Doppelböden beschrieben. Diese Stützvorrichtung weist einen Basisabschnitt sowie ein Stützelement auf. An der inneren Oberfläche des Basisabschnitts sind in Umfangsrichtung parallel zueinander verlaufende Rippen angeordnet. Die Rippen sind in ihrem Verlauf entlang der inneren Oberfläche unterbrochen. Das Stützelement weist ebenfalls in Umfangsrichtung parallel zueinander verlaufende und in ihrem Verlauf unterbrochene Rippen auf, und zwar an einer äußeren Oberfläche des Stützelements, die im Einbauzustand der inneren Oberfläche des Basisabschnitts zugewandt ist. Die Unterbrechungen im Verlauf der Rippen sind so gewählt, dass die Rippen des Stützelementes in die Zwischenräume zwischen den Rippen des Basisabschnitts eingeführt werden können. Je nachdem, welche Gesamtlänge die Vorrichtung erhalten soll, wird das Stützelement tiefer oder weniger tief in den Basisabschnitt eingeführt und anschließend ein Stück weit rotiert, vergleichbar einem Bajonettverschluss.

Aufgabe der Erfindung ist es, ein Stützelement zu schaffen, mit dem ein Stützhöhenbereich bereitgestellt werden kann, der deutlich größer ist als bei bekannten Stützen.

Erfindungsgemäß ist hierzu ein Stützelement vorgesehen, insbesondere für das Abstützen von Deckelelementen in den Mittelbereichen von estrichbündigen Kanälen, das aus wenigstens einem ersten und einem zweiten Stützelement-Teil besteht, wobei das erste Stützelement-Teil wenigstens zwei Ausnehmungen aufweist, in denen jeweils das zweite Stützelement-Teil wenigstens abschnittsweise aufnehmbar ist, wobei das Stützelement bei Positionierung des zweiten Stützelement-Teils in einer ersten der Ausnehmungen eine erste Gesamtlänge und bei Positionierung des zweiten Stützelement-Teils in einer zweiten der Ausnehmungen eine zweite Gesamtlänge aufweist, wobei das zweite Stützelement-Teil eine Außenkontur aufweist, die nicht kreisförmig ist, und wobei die Ausnehmungen im ersten Stützelement-Teil eine an die Außenkontur angepasste Kontur aufweisen, so dass das zweite Stützelement-Teil mit seiner Außenkontur wenigstens abschnittsweise an der Innenkontur des ersten Stützelement-Teils anliegt.

Die Bereiche, die mittels des erfindungsgemäßen Stützelements zusätzlich gestützt werden sollen, sind Stoßstellen zwischen wenigstens zwei Deckelelementen und insbesondere in deren Mittelbereichen. Als Mittelbereich ist hier jeder Bereich eines Deckelelements zu verstehen, der sich etwa in der Mitte zwischen den eigentlichen Auflagerbereichen eines Deckelelements befindet und sich bei Belastung, beispielsweise durch Möbel, Personen oder dergleichen aber auch Fahrzeuge oder dergleichen leicht verbiegen kann. Beispielsweise sind diese Deckelelemente Deckel eines estrichbündigen Kanals zur Führung von Kabeln und Leitungen oder dergleichen.

Das erste Stützelement-Teil weist wenigstens zwei Ausnehmungen auf, wobei eine beliebige Anzahl von Ausnehmungen möglich ist. Als Ausnehmung wird hier ein Bereich verstanden, der wenigstens eine Seitenfläche sowie eine Auflagefläche aufweist. Das erste Stützelement-Teil kann also beispielsweise ein Blechteil sein, in das Stifte oder dergleichen an unterschiedlichen Positionen entlang des Längsverlaufs des Blechteils in dieses eingebracht werden können. Anstatt der Stifte oder dergleichen kann das Blechteil auch als Biegeteil mit einer im Wesentlichen länglichen Gestalt ausgebildet sein, an dem wenigstens eine, vorzugsweise zwei balkonartige Abkantungen zu verschiedenen Seiten des Blechs an unterschiedlichen Positionen im Längsverlauf des Blechs angeordnet sind. Eine Ausnehmung im Sinne der Erfindung kann darüber hinaus eine Durchgangsbohrung oder Sackbohrung oder dergleichen sein, in die dann Stifte, Schrauben, Splinte oder dergleichen, aber auch Blechstreifen oder dergleichen in vorstehend beschriebener Weise eingebracht werden können. Auch eine Einfräsung im Seitenbereich des ersten Stützelement-Teils mit den vorstehenden Eigenschaften ist als Ausnehmung im Sinne der Erfindung anzusehen. Eine Ausnehmung gemäß der Erfindung kann auch mittels eines Spritzgussverfahrens, Tiefziehverfahren oder ähnlichen formgebenden Herstellungsverfahren für Kunststoff- oder Metallteile hergestellt sein, bei dem eine entsprechende Negativform dann einen Dorn oder dergleichen aufweist. Eine nicht kreisförmige Kontur im Sinne der Erfindung kann beispielsweise eine dreieckige, quaderförmige, quadratische oder rautenförmige Kontur sein. Aber auch eine Kontur mit einer beliebigen Anzahl von Kanten ist möglich. Ebenfalls möglich ist eine elliptische Kontur.

Das Aufnehmen des zweiten Stützelement-Teils im ersten Stützelement-Teil erfolgt vorzugsweise mittels Stecken. Es ist im Rahmen der Erfindung jedoch jede Möglichkeit des Einbringens eines Teiles in ein anderes Teil denkbar, wie beispielsweise auch Einschrauben oder dergleichen.

Durch die erfindungsgemäße Anordnung wird vorteilhaft erreicht, dass ein Stützelement, das aus wenigstens zwei Stützelement-Teilen besteht, je nachdem, welche Ausnehmung verwendet wird, wenigstens zwei Gesamtlängen aufweist. Besonders vorteilhaft ist das zweite Stützelement-Teil in der Positionierung in einer der Ausnehmungen im Wesentlichen vollständig im ersten Stützelement-Teil aufgenommen, so dass eine erste Gesamtlänge im Wesentlichen der Höhe des ersten Stützelement-Teils entspricht. Die zweite Gesamtlänge kann dann im Wesentlichen beliebig vorgegeben sein und annähernd an die addierten Längen des ersten und des zweiten Stützelement-Teils reichen. Die zweite Gesamtlänge ist jedoch vorzugsweise so gewählt, dass das zweite Stützelement-Teil im ersten Stützelement-Teil ausreichend gut geführt ist, um ein stabiles Stützelement zu erhalten.

Da an dem beschriebenen Stützelement beliebige weitere Stützelement-Teile angeordnet werden können, vorzugsweise mittels Schrauben, aber auch beispielsweise mittels Kleben, Schweißen, Stecken oder dergleichen, kann die Verwendung findende Gesamtlänge ausgehend von der Gesamtlänge aus erstem und zweitem Stützelement-Teil im Wesentlichen beliebig variiert werden.

Aus der nicht kreisförmigen Außenkontur des zweiten Stützelement-Teils ergibt sich vorteilhaft, dass das zweite Stützelement-Teil im ersten Stützelement-Teil drehsicher gehalten ist. So könnte beispielsweise das Stützelement auf einem Boden vormontiert und ausgerichtet werden und beim Verschließen des Kanals oder des Bodens mit eventuell vorhandenen Ausnehmungen oder dergleichen im Deckelelement in Eingriff gebracht werden, die für die Aufnahme des Stützelements vorgesehen sind. Weiter ist diese formschlussartige Aufnahme, die durch das Ineinanderstecken der Stützelement-Teile mit wenigstens teilweiser Anlage der jeweiligen Seitenflächen erreicht wird, vorteilhaft, wenn an einem der Teile beispielsweise ein Gewinde für die Aufnahme eines weiteren Stützelement-Teils vorgesehen ist. Ein Festziehen beispielsweise durch Kontern der Schraubverbindung ist dadurch erheblich erleichtert

In Weiterbildung der Erfindung weist wenigsten das erste und/oder das zweite Stützelement-Teil ein Gewinde für den Eingriff mit einem Gewinde eines dritten Stützelement-Teils auf, wobei die Gewindeachsen des ersten oder des zweiten Stützelement-Teils im Wesentlichen parallel zur Aufnahmerichtung des zweiten Stützelement-Teils im ersten Stützelement-Teil ausgerichtet ist.

Das Gewinde kann an den Stützelement-Teilen entweder ein Innengewinde oder ein Außengewinde sein, so dass das dritte Stützelement-Teil also entweder von wenigstens einem der anderen Stützelement-Teile in deren Innenbereich aufgenommen wird oder diese in seinen Innenbereich aufnimmt.

Das Vorsehen des Gewindes für den Eingriff mit einem dritten Stützelement-Teil ist, wie vorstehend bereits dargestellt, besonders vorteilhaft, da die Gesamtlänge des Stützelements im möglichen Gesamtlängenbereich völlig variabel ist. So kann beispielsweise bei der ersten, kürzesten Gesamtlänge das zweite Stützelement-Teil im Wesentlichen vollständig im ersten aufgenommen sein und das dritte Stützelement-Teil im Wesentlichen vollständig im ersten oder zweiten Stützelement-Teil aufgenommen sein. Bei der zweiten, längsten Gesamtlänge ist dann das zweite Stützelement-Teil im ersten nur noch so aufgenommen, dass ein für die Stabilität ausreichender Halt der beiden Teile ineinander sichergestellt wird. Das dritte Stützelement-Teil und das mit dem dritten Stützelement-Teil verbundene Stützelement-Teil sind dann fast vollständig auseinander geschraubt. Besonders vorteilhaft sind die einzelnen Längen der drei Stützelement-Teil im Wesentlichen gleich, so dass bei der ersten Gesamtlänge ein sehr kompaktes Stützelement zur Verfügung steht und bei der zweiten Gesamtlänge annähernd die drei Einzellängen addiert sind.

In Weiterbildung der Erfindung sind die Mittellängsachsen der wenigstens zwei Ausnehmungen im ersten Stützelement-Teil koaxial zueinander angeordnet.

Dadurch wird das Stützelement noch kompakter im Zustand der ersten Gesamtlänge und säulenartig im Zustand der zweiten Gesamtlänge. Dadurch wird durch das Stützelement besonders wenig Platz im Kanalinneren beansprucht, wodurch die Anzahl der möglichen Kabel und Leitungen im Kanal nur geringfügig eingeschränkt wird.

In Weiterbildung der Erfindung bilden wenigstens zwei Ausnehmungen einen gemeinsamen Öffnungsbereich in einer Außenkontur des ersten Stützelement-Teils, wobei die Ausnehmungen um ihre Mittellängsachsen zueinander verdreht angeordnet sind. Die Ausnehmungen sind insbesondere um einen Winkel zwischen 5° und 175° zueinander verdreht, vorzugsweise um einen Winkel von 90°.

Ein gemeinsamer Öffnungsbereich der Ausnehmungen in der Außenkontur des ersten Stützelement-Teils erleichtert die Herstellung beispielsweise mittels Bohren und/oder Fräsen, da es dabei nicht umgespannt werden muss sondern lediglich um die Bohrachse beziehungsweise die Mittellängsachse der Ausnehmung gedreht werden muss. Auch die Herstellung des ersten Stützelement-Teils mittels Spritzguss, Extrudieren, Tiefziehen oder dergleichen wird vereinfacht, da lediglich ein Dorn oder dergleichen vorgesehen werden muss, der dann eine entsprechende Kontur aufweist. Das Werkzeug für das Herstellungsverfahren wird so einfach und dadurch günstig. In der Anwendung ist das erfindungsgemäße Stützelement einfach zu bedienen und äußerst flexibel.

In Weiterbildung der Erfindung weist das zweite Stützelement-Teil ein Innengewinde auf, wobei das erste Stützelement-Teil als Kopfteil für eine Anlage an einem abzustützenden Deckel und/oder als Fußteil für die Auflage auf einem Boden ausgebildet ist. Das dritte Stützelement-Teil ist dann entsprechend als Fußteil für die Auflage auf einem Boden und/oder als Kopfteil für die Anlage an dem Deckel ausgebildet.

Das Innengewinde kann beispielsweise mittels einer Gewindehülse, einer Mutter oder dergleichen bereitgestellt werden, wobei die Gewindeteile dann entsprechend in das zweite Stützelement-Teil einzubringen sind. Aber auch das Vorsehen eines Gewindes in das zweite Stützelement-Teil ist möglich, das beispielsweise mittels Gewindeschneiden hergestellt wird.

Vorzugsweise ist das erste Stützelement-Teil das Kopfteil, das zweite Stützelement-Teil ein Mittelteil und das dritte Stützelement-Teil das Fußteil. Dadurch ergibt sich eine vergleichsweise große Auflagefläche eines beziehungsweise mehrerer vergleichsweise instabiler Deckelelemente auf dem ersten Stützelement-Teil für die Aufnahme von Kräften, ohne dass weitere Auflageteile vorgesehen werden müssen. Weiter ist dabei vorteilhaft, dass das dritte Stützelement-Teil, das ja im Wesentlichen lediglich ein Außengewinde aufweisen muss und daher beispielsweise ein Gewindebolzen sein kann, im stabilen Bodenbereich des Kanals nur sehr wenig Platz benötigt.

Das erste Stützelement-Teil kann im Bereich der Anlage an dem Deckelelement beispielsweise mit Dämpfungselementen und/oder Klebeelementen versehen sein. Zum Einen ist die Anordnung dadurch nicht beziehungsweise nur sehr gering der Gefahr eines Verkippens oder Umfallens ausgesetzt. Zum Anderen ist erreicht, dass im Wesentlichen keine Geräusche bei wechselnder Belastung des Deckelelements entstehen. Dies ist insbesondere dann vorteilhaft, wenn das Deckelelement wie auch das erste Stützelement-Teil beispielsweise aus einem Metall gefertigt sind und beispielsweise wegen Temperaturschwankungen oder Materialdeformationen nicht vollständig aneinander anliegen. Dies hätte zur Folge, dass bei Belastung ein Geräusch entstehen würde, wenn die beiden Teile aufeinander treffen.

In Weiterbildung der Erfindung sind die Mittellängsachsen der Gewinde, des zweiten Stützelement-Teils und der Ausnehmungen im ersten Stützelement-Teil im Wesentlichen koaxial zueinander angeordnet.

In einer Ausgestaltung der Erfindung weist das zweite Stützelement-Teil eine Mehrkant-Außenkontur auf, insbesondere eine im Wesentlichen quaderförmige Außenkontur, ist das erste Stützelement-Teil becherartig ausgebildet und sind die darin angeordneten Ausnehmungen jeweils im Wesentlichen quaderförmig ausgebildet sowie kreuzförmig angeordnet.

Dadurch ergibt sich vorteilhaft die besonders einfach Herstellbarkeit, beispielsweise des zweiten Stützelement-Teils aus einem quaderförmigen Strang-Rohmaterial, sowie eine einfache Anwendung des Stützelements.

In Weiterbildung der Erfindung weist das zweite Stützelement-Teil eine kreuzförmige Außenkontur auf, wobei ein erstes Flügelpaar bestehend aus sich gegenüberliegenden Flügeln dieser Kreuzform erheblich kürzer ist als ein zweites Flügelpaar, und wenigstens eine der Ausnehmungen im ersten Stützelement-Teil ist an die Kreuzform angepasst.

Dadurch wird die eine erhöhte Verkippsicherung des zweiten Stützelement-Teils im ersten Stützelement-Teil erreicht. Diese kann noch weiter erhöht werden, wenn eine besonders enge Passung im Aufnahmebereich vorgesehen wird, wobei die Passung jedoch vorzugsweise ein manuelles Ineinanderführen der Stützelement-Teile ohne weitere Hilfsmittel noch ermöglichen sollte.

In Weiterbildung der Erfindung weist das erste Stützelement-Teil eine im Wesentlichen kreuzförmige Außenkontur auf.

Das erste Stützelement-Teil weist dadurch lediglich eine Wandung auf, die einige wenige Millimeter dick ist, wodurch eine Materialersparnis bei der Herstellung beispielsweise mittels Spritzgießen erreicht wird. Auch die Aushärtezeiten und das Aushärten, ohne das sich das Bauteil verzieht, ist dadurch ermöglicht. Diese Ausführung des ersten Stützelement-Teils kann auch mittels Tiefziehen erreicht werden, beispielsweise basierend auf einem Blechteil oder einer Kunststoffplatte oder dergleichen.

In Weiterbildung der Erfindung ist das dritte Stützelement-Teil eine Senkkopf-Schraube.

Eine Senkkopf-Schraube weist eine ebene und im Vergleich zum Gewinde vergrößerte Fläche am Schraubenkopf auf, so dass ein Standfuß mit einfachen Mitteln bereitgestellt ist. Insbesondere ist die Senkkopf-Schraube ein Normteil.

Weitere Vorteile und Merkmale der Erfindung ergeben sich aus den Ansprüchen und der nachfolgenden Beschreibung verschiedener Ausführungsbeispiele der Erfindung, die anhand der Zeichnungen dargestellt sind. Teilweise sind Merkmale der Ausführungsbeispiele nur in Bezug auf eine Abbildung eines Ausführungsbeispiels beschrieben, können jedoch im Rahmen der Erfindung beliebig mit den anderen Ausführungsbeispielen kombiniert werden. In den schematischen Zeichnungen zeigen:
- Fig.1: eine Seitenansicht einer Anordnung mit einem erfindungsgemäßen Stützelement einer ersten Ausführungsform mit einem zu stützenden Deckelelement, wobei das Stützelement eine erste, geringst mögliche Höhe aufweist,
- Fig.2: eine Seitenansicht der Anordnung der Fig.1, wobei das Stützelement eine zweite, maximal mögliche Höhe aufweist,
- Fig.3: eine seitliche Schnittansicht des Stützelements gemäß Linie III-III in Fig.1,
- Fig.4: eine seitliche Schnittansicht des Stützelements gemäß Linie IV-IV in Fig.2,
- Fig.5: eine isometrische Ansicht von schräg unten eines ersten Stützelement-Teils des erfindungsgemäßen Stützelements in Fig.1,
- Fig.6: eine isometrische Ansicht von schräg unten eines zweiten Stützelement-Teils des erfindungsgemäßen Stützelements in Fig.1, sowie
- Fig.7: eine geschnittene Seitenansicht eines estrichbündigen Kanals, in dem das erfindungsgemäße Stützelement angeordnet ist.

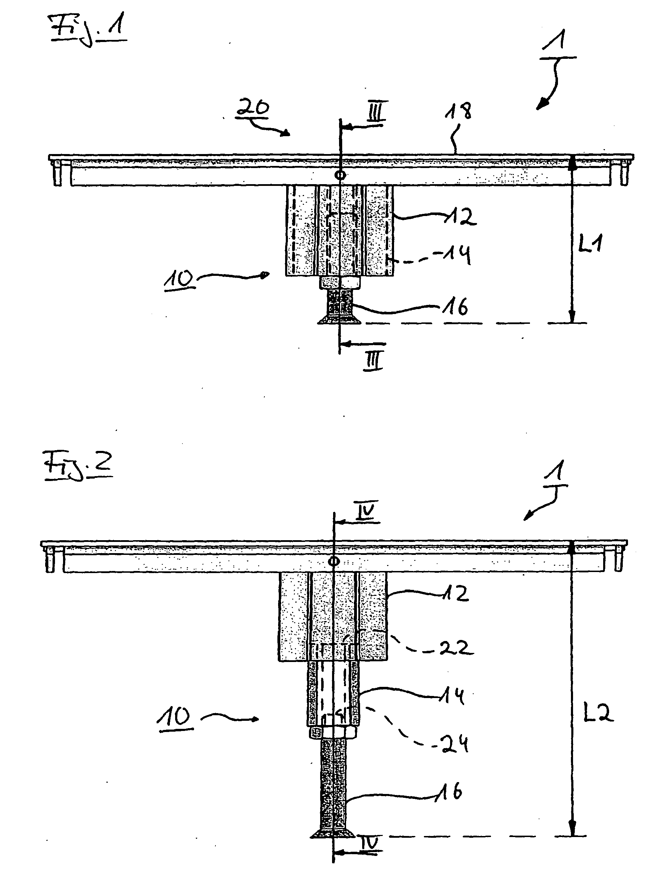

Fig.1 zeigt eine Seitenansicht einer Anordnung 1 mit einem erfindungsgemäßen Stützelement 10 gemäß einer ersten Ausführungsform und einem Deckelelement 18. Das Stützelement weist ein erstes Stützelement-Teil 12, ein zweites, in Fig.1 strichliniert dargestelltes Stützelement-Teil 14 sowie ein drittes Stützelement-Teil 16 auf. Das erste Stützelement-Teil 12 ist dabei in der dargestellten Anordnung ein Kopfteil, das zweite Stützelement-Teil 14 ein Mittelteil und das dritte Stützelement-Teil 16 ein Fußteil des Stützelements 10.

Das erste Stützelement-Teil 12 ist mit einem Deckelelement 18 so in einem Mittelbereich 20 des Deckelelements 18 eines estrichbündigen Kanals in Anlage gebracht, dass das Deckelelement 18 im Wesentlichen auf dem Stützelement-Teil 12 aufliegt. Das dritte Stützelement-Teil 16 ist mit einem nicht dargestellten Boden des estrichbündigen Kanals in Anlage gebracht, so dass eine sichere und stabile Abstützung des Mittelbereichs 20 des Deckelelements 18 bereitgestellt ist.

Das zweite Stützelement-Teil 14 ist in Fig.1 vollständig in einer Ausnehmung des ersten Stützelement-Teils 12 und das dritte Stützelement-Teil 16 annähernd vollständig im zweiten Stützelement-Teil 14 aufgenommen beziehungsweise in dieses eingeschraubt. Das Stützelement 10, und somit die Anordnung 1, weist gemäß Fig.1 eine erste Gesamtlänge L1 auf, die der kleinst möglichen Höhe der Anordnung 1 entspricht.

Eine weitere Seitenansicht der Anordnung 1 aus Fig. 1 ist in Fig.2 dargestellt, wobei das Stützelement 10, und somit die Anordnung 1, eine zweite Gesamtlänge L2 aufweist, die der maximal möglichen Höhe der Anordnung 1 entspricht. Um diese Gesamtlänge L2 zu erreichen, ist von dem zweiten Stützelement-Teil 14 nur ein geringer Teil 22 in dem ersten Stützelement-Teil 12 aufgenommen. Weiterhin ist von dem dritten Stützelement-Teil 16 lediglich ein geringer Teil 24 in dem zweiten Stützelement-Teil 14 aufgenommen beziehungsweise in dieses eingeschraubt.

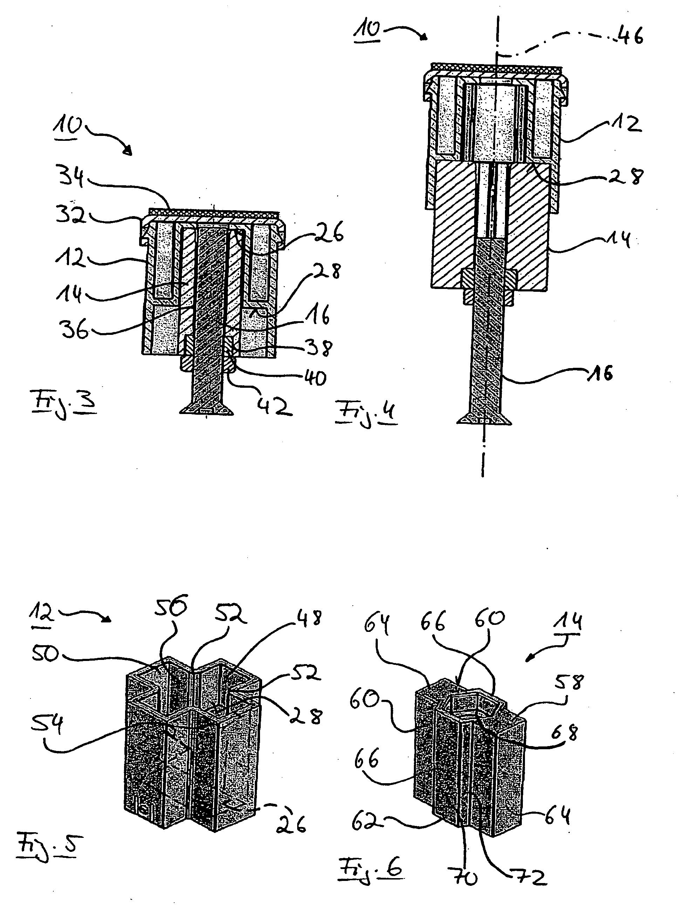

Aus der gemäß Linie III-III in Fig.1 geschnittenen Ansicht des Stützelements 10 gemäß Fig.3 ist ersichtlich, wie das zweite Stützelement-Teil 14 in dem ersten Stützelement-Teil 12 aufgenommen ist und wie das dritte Stützelement-Teil 16 in dem zweiten Stützelement-Teil 14 aufgenommen ist beziehungsweise wie es in dieses eingeschraubt ist, um annähernd die minimale Gesamtlänge des Stützelements 10 zu erhalten.

Darüber hinaus ist aus Fig.3 ersichtlich, dass das erste Stützelement-Teil 12 zwei Anlageflächen 26, 28 für die Anlage des zweiten Stützelement-Teils 14 aufweist, wobei das zweite Stützelement-Teil 14 in Fig.3 an der Anlagefläche 26 anliegt, und in einem dem Deckelelement zugewandten Endbereich 30 mit einem Deckel 32 versehen ist. An diesem Deckel 32 ist ein Dämpfungselement 34 aufgeklebt, das schaumstoffartig und/oder gummiartig ausgebildet ist.

Das zweite Stützelement-Teil 14 weist eine Ausnehmung 36 für die Aufnahme des dritten Stützelement-Teils 16 auf, das als Senkkopf-Schraube ausgebildet ist. Für den Eingriff des Gewindes der Senkkopf-Schraube ist in einer Ausnehmung 38 des zweiten Stützelement-Teils 14 eine Mutter 40 angeordnet. Die Mutter 40 kann gegebenenfalls in das Stützelement-Teil 14 eingeklemmt und/oder eingeklebt sein. Mittels dieser Mutter 40 und einer Kontermutter 42, die mit dem Gewinde des dritten Stützelement-Teil 16 in Eingriff steht, kann das dritte Stützelement-Teil 16 in seiner Position relativ zum zweiten Stützelement-Teil 14 mittels Kontern fixiert werden.

Aus der gemäß Linie IV-IV in Fig.2 geschnittenen Ansicht des Stützelements 10 gemäß Fig.4 ist ersichtlich, wie das erste Stützelement-Teil 12, das zweite Stützelement-Teil 14 und das dritte Stützelement-Teil 16 im Vergleich zu Fig.3 relativ zueinander positioniert sind, um zumindest annähernd die maximale Gesamtlänge des Stützelements 10 zu erhalten. Dazu liegt das zweite Stützelement-Teil 14 an der Anlagefläche 28 an. Das dritte Stützelement-Teil 16 ist zumindest weitgehend aus dem zweiten Stützelement-Teil 14 herausgeschraubt.

Vergleicht man die Fig.3 mit der Fig.4 ist darüber hinaus ersichtlich, dass das zweite Stützelement-Teil 14 im Wesentlichen quaderförmig ausgebildet ist, siehe auch Fig.6. Gegenüber der Fig.3 ist das zweite Stützelement-Teil 14 um 90° um eine Mittelachse 46 des Stützelements 10 gedreht, wobei alle (Mittel-)Längsachsen der Teile des Stützelements 10 konzentrisch zu der Mittelachse 46 angeordnet sind.

In der Fig.5 ist eine isometrische Ansicht von schräg unten des ersten Stützelement-Teils 12 des erfindungsgemäßen Stützelements dargestellt. Es ist zu erkennen, dass das erste Stützelement-Teil 12 im Wesentlichen eine kreuzförmige Außenkontur aufweist. Es ist auch zu erkennen, dass das erste Stützelement-Teil 12 zwei Ausnehmungen 48, 50 aufweist, die so rechtwinklig zueinander orientiert in das erste Stützelement-Teil 12 eingebracht sind, dass sie eine Kreuzform bilden. Die Ausnehmungen sind unterschiedlich tief, so dass die Anlageflächen 26, 28, die die innerhalb des ersten Stützelement-Teils 12 angeordneten Grenzflächen der Ausnehmungen 48, 50 sind, unterschiedliche Niveaus aufweisen. Die Übergänge 52 der Ausnehmungen 48, 50 ineinander sind abgerundet, wobei sich die Abrundungen unterbrechungsfrei bis zur tiefen Anlagefläche 26 erstrecken. Dadurch sind die Randkanten 54 der hohen Anlagefläche 28 relativ zu den Randflächen 56 der Ausnehmung 50 zurückgesetzt.

Das Zurücksetzen der Randkanten 54 sowie die abgerundeten Übergänge 52, wie in Fig.5 dargestellt, ermöglicht es, dem zweiten Stützelement-Teil 14 eine Außenkontur zu geben, wie sie in Fig.6 dargestellt ist. Das Stützelement-Teil 14 weist, wie vorstehend bereits beschrieben, einen quaderförmigen Hauptkörper 58 auf. An diesen Hauptkörper 58 sind in dessen Seitenflächen 60 Auskragungen 62 vorgesehen, so dass das zweite Stützelement-Teil 14 eine angedeutete Kreuzform aufweist. Die Kreuzform ist gebildet aus zwei sich kreuzenden Balken, wobei einer der Balken ein erstes, kurzes Kreuzflügel-Paar 64 und der andere Balken ein zweites, langes Kreuzflügel-Paar 66 aufweist. Das kurze Kreuzflügel-Paar 64 entsteht dadurch, dass das zweite Stützelement-Teil 14 eine sechskantförmige Ausnehmung 68 für die Aufnahme einer nicht dargestellten Schraubenmutter aufweist, die breiter ist als das lange Kreuzflügel-Paar 66. Die sechskantförmige Ausnehmung 68 ist auf das kurze Kreuzflügel-Paar 64 übertragen, so dass eine Stirnfläche 70 der Auskragung 62, die parallel zur Seitenfläche 60 ausgerichtet ist, in einem abgewinkelten Bereich 72 fasenartig in die Seitenfläche 60 übergeht.

Das zweite Stützelement-Teil 14 gemäß Fig.6 kann unterschiedlich ausgerichtet vom ersten Stützelement-Teil 12 gemäß Fig.5 aufgenommen werden. Zum Einen kann das zweite Stützelement-Teil 14 im Wesentlichen in der ersten Ausnehmung 48 aufgenommen sein. Dann liegt das zweite Stützelement-Teil 14 an der hohen Anlagefläche 28 an, die kurzen Kreuzflügel 64 ragen in die zweite Ausnehmung 50 und die langen Kreuzflügel 66 ragen in die Ausnehmung 48. Zum Anderen kann das zweite Stützelement-Teil 14 um 90° um dessen Mittellängsachse gedreht werden und im Wesentlichen in der Ausnehmung 50 angeordnet werden. Dann liegt das zweite Stützelement-Teil 14 an der tiefen Anlagefläche 26 an, die langen Kreuzflügel 66 ragen vollständig in die Ausnehmung 50 und die kurzen Kreuzflügel 64 ragen in den Bereich, der durch das Zurücksetzen der Randkanten 54 relativ zur Randfläche 56 frei ist. In beiden Ausrichtungen der Stützelement-Teile 12, 14 zueinander liegen die abgewinkelten Bereiche 72 des zweiten Stützelement-Teils 14 zumindest teilweise an den abgerundeten Übergängen 52 des ersten Stützelement-Teils 12 an. Durch die kurzen Kreuzflügel 64 und die Anlageflächen zwischen den abgewinkelten Bereichen 72 und den Übergängen 52 ist die Ausrichtung des zweiten Stützelement-Teils 14 relativ zum ersten Stützelement-Teil 12 stabilisiert. Ein Verkippen oder Verdrehen der beiden Stützelement-Teile 12, 14 gegeneinander wird dadurch vermieden.

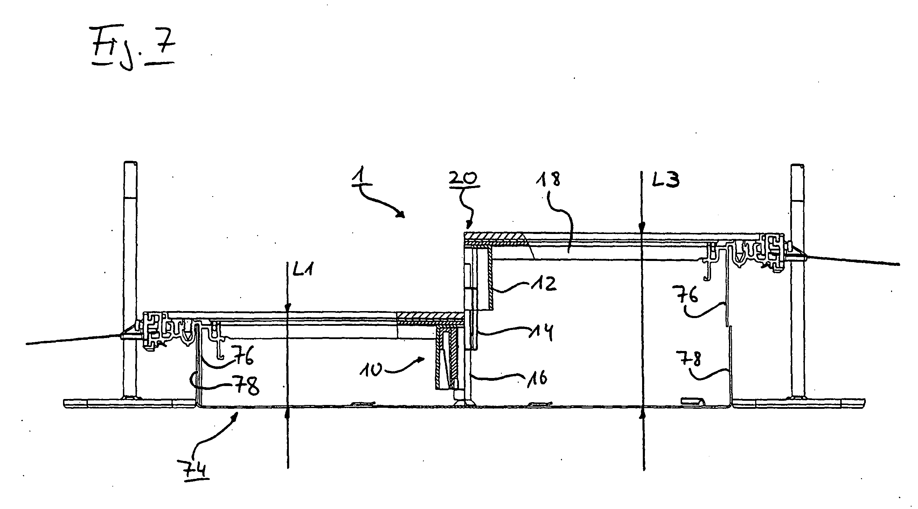

Eine geschnittene Seitenansicht eines estrichbündigen Kanals 74 mit der Anordnung 1 ist in Fig.7 dargestellt. Die Anordnung 1 weist, wie vorstehend beschrieben, das erfindungsgemäße Stützelement 10 im Mittelbereich 20 des Deckelelements 18 auf. Der Abbildung ist zu entnehmen, wie die Stützelement-Teile 12, 14, 16 des Stützelements 10 in unterschiedlich eingestellten Höhen L1, der Mindesthöhe des Stützelements 10, und einer Höhe L3 des Stützelements 10 zwischen L1 und L2, relativ zueinander angeordnet sind. Bei Höheneinstellungen des Kanals 74, die zwischen L1 und L2 liegen, werden die Stützelement-Teile 12, 14, 16 entsprechend zueinander positioniert, um die benötigte Höhe des Stützelements 10 zu erreichen, beispielsweise das Stützelement-Teil 16 weiter in das Stützelement-Teil 14 eingeschraubt und/oder das zweite Stützelement-Teil 14 um 90° verdreht in das erste Stützelement-Teil 12 eingebracht.

Die maximal zu verwendende Höhe des Stützelements 10 im jeweiligen Kanal 74 muss jedoch so gewählt werden, dass die Höhe des Stützelements 10 mit der maximalen Höhe des Kanals 74 zusammenpasst. Die maximale Höhe des Kanals 74 wird unter anderem durch die Länge der seitlichen, sich überlappenden Wandteile 76, 78 des Kanals 74 definiert. Es ist insbesondere aus der rechten Abbildungshälfte der Fig.7 ersichtlich, dass mit dem verwendeten Stützelement 10 ein Deckelelement 18 eines noch um etwa ein Drittel höheren Kanals abgestützt werden könnte, die maximale Höhe des Kanals 74 aber schon erreicht ist. Eine bei Kanälen mit unterschiedlichen maximalen Höhen im Wesentlichen universelle Einsetzbarkeit des erfindungsgemäßen Stützelements 10 ist durch die Stützelement-Teile 12, 14, 16 erreicht.

## Patentansprüche

1. Stützelement, insbesondere für das Abstützen von Deckelelementen in den Mittelbereichen (20) von estrichbündigen Kanälen, bestehend aus wenigstens einem ersten Stützelement-Teil (12) und einem zweiten Stützelement-Teil (14), wobei das erste Stützelement-Teil (12) wenigstens zwei Ausnehmungen (48, 50) aufweist, in denen jeweils das zweite Stützelement-Teil (14) wenigstens abschnittsweise aufnehmbar ist, wobei das Stützelement (10) bei Positionierung des zweiten Stützelement-Teils (14) in einer ersten der Ausnehmungen (48) eine erste Gesamtlänge L1 und bei Positionierung des zweiten Stützelement-Teils (14) in einer zweiten der Ausnehmungen (50) eine zweite Gesamtlänge L2 aufweist, **dadurch gekennzeichnet, dass** das zweite Stützelement-Teil (14) eine Außenkontur aufweist, die nicht kreisförmig ist, und dass die Ausnehmungen (48, 50) im ersten Stützelement-Teil (12) eine an die Außenkontur angepasste Innenkontur aufweisen, so dass das zweite Stützelement-Teil (14) mit seiner Außenkontur wenigstens abschnittsweise an der Innenkontur des ersten Stützelement-Teils (12) anliegt.

2. Stützelement nach Anspruch 1, **dadurch gekennzeichnet, dass** wenigsten das erste oder das zweite Stützelement-Teil (12, 14) ein Gewinde für den Eingriff mit einem Gewinde eines dritten Stützelement-Teils (16) aufweist, wobei die Gewindeachsen (46) des ersten oder des zweiten Stützelement-Teils (12, 14) im Wesentlichen parallel zur Aufnahmerichtung des zweiten Stützelement-Teils (14) im ersten Stützelement-Teil (12) ausgerichtet ist.

3. Stützelement nach einem der vorstehenden Ansprüche, **dadurch gekennzeichnet, dass** die Mittellängsachsen (46) der wenigstens zwei Ausnehmungen (48, 50) im ersten Stützelement-Teil (12) koaxial zueinander angeordnet sind.

4. Stützelement nach einem der vorstehenden Ansprüche, **dadurch gekennzeichnet, dass** wenigstens zwei Ausnehmungen (48, 50) einen gemeinsamen Öffnungsbereich in einer Außenkontur des ersten Stützelement-Teils (12) bilden, wobei die Ausnehmungen (48, 50) um ihre Mittellängsachsen (46) zueinander verdreht sind.

5. Stützelement nach Anspruch 4, **dadurch gekennzeichnet, dass** die Ausnehmungen (48, 50) um einen Winkel zwischen 5° und 175° zueinander verdreht sind, insbesondere um einen Winkel von 90°.

6. Stützelement nach einem der vorstehenden Ansprüche, **dadurch gekennzeichnet, dass** das zweite Stützelement-Teil (14) ein Innengewinde (40) aufweist und dass das erste Stützelement-Teil (12) als Kopfteil für eine Anlage an einem abzustützenden Deckelelement (18) und/oder als Fußteil für die Auflage auf einem Boden ausgebildet ist.

7. Stützelement nach einem der Ansprüche 2 bis 6, **dadurch gekennzeichnet, dass** das dritte Stützelement-Teil (16) als Fußteil für die Auflage auf einem Boden und/oder als Kopfteil für die Anlage an dem Deckelelement (18) ausgebildet ist.

8. Stützelement nach einem der Ansprüche 2 bis 7, **dadurch gekennzeichnet, dass** die Mittellängsachsen (46) der Gewinde, des zweiten Stützelement-Teils (16) und der Ausnehmungen (48, 50) im ersten Stützelement-Teil (12) im Wesentlichen koaxial zueinander angeordnet sind.

9. Stützelement nach einem der vorstehenden Ansprüche, **dadurch gekennzeichnet, dass** das zweite Stützelement-Teil (12) eine Mehrkant-Außenkontur aufweist, insbesondere eine im Wesentlichen quaderförmige Außenkontur, und dass das erste Stützelement-Teil (12) becherartig ausgebildet ist und die darin angeordneten Ausnehmungen (48, 50) jeweils im Wesentlichen quaderförmig ausgebildet sowie kreuzförmig angeordnet sind.

10. Stützelement nach Anspruch 9, **dadurch gekennzeichnet, dass** das zweite Stützelement-Teil (14) eine kreuzförmige Außenkontur aufweist, wobei ein erstes Flügelpaar (64) bestehend aus sich gegenüberliegenden Flügeln dieser Kreuzform erheblich kürzer ist als ein zweites Flügelpaar (66), und dass wenigstens eine der Ausnehmungen (48, 50) im ersten Stützelement-Teil (12) an die Kreuzform angepasst ist.

11. Stützelement nach einem der vorstehenden Ansprüche, **dadurch gekennzeichnet, dass** das erste Stützelement-Teil (12) eine im Wesentlichen kreuzförmige Außenkontur aufweist.

12. Stützelement nach einem der Ansprüche 2 bis 11, **dadurch gekennzeichnet, dass** das dritte Stützelement-Teil (16) eine Senkkopf-Schraube ist.

13. Leitungskanal mit einem im Querschnitt rinnenförmigen Grundkörper und einem den rinnenförmigen Grundkörper abdeckenden Deckelelement (18), **gekennzeichnet durch** wenigstens ein Stützelement (10) nach wenigstens einem der vorstehenden Ansprüche.

## Claims

1. Supporting element, in particular for supporting cover elements in the middle areas (20) of screed-flush ducts, comprising at least one first supporting element part (12) and one second supporting element part (14), where the first supporting element part (12) has a least two recesses (48, 50) in each of which the second supporting element part (14) can be held at least in some sections, where the supporting element (10) has a first total length L1 when the second supporting element part (14) is positioned in a first of the recesses (48) and a second total length of L2 when the second supporting element part (14) is positioned in a second of the recesses (50), **characterized in that** the second supporting element part (14) has an outer contour that is not circular, and **in that** the recesses (48, 50) in the first supporting element part (12) have an inner contour adapted to the outer contour such that the second supporting element part (14) contacts at least in some sections the inner contour of the first supporting element part (12) with its outer contour.

2. Supporting element according to Claim 1, **characterized in that** at least the first or the second supporting element part (12, 14) has a thread for engagement with a thread of a third supporting element part (16), where the thread axis (46) of the first or of the second supporting element part (12, 14) is aligned substantially parallel to the receiving direction of the second supporting element part (14) inside the first supporting element part (12).

3. Supporting element according to one of the preceding claims, **characterized in that** the central longitudinal axes (46) of the at least two recesses (48, 50) in the first supporting element part (12) are arranged coaxial to one another.

4. Supporting element according to one of the preceding claims, **characterized in that** at least two recesses (48, 50) form a common opening area in an outer contour of the first supporting element part (12), where the recesses (48, 50) are rotated relative to one another about their central longitudinal axes (46).

5. Supporting element according to Claim 4, **characterized in that** the recesses (48, 50) are rotated relative to one another by an angle between 5° and 175°, in particular about an angle of 90°.

6. Supporting element according to one of the preceding claims, **characterized in that** the second supporting element part (14) has an internal thread (40) and **in that** the first supporting element part (12) is designed as a top part for contact with a cover element (18) to be supported and/or as a base part for resting on a floor.

7. Supporting element according to one of Claims 2 to 6, **characterized in that** in the third supporting element part (16) is designed as a base part for resting on a floor and/or as a top part for contact with the cover element (18).

8. Supporting element according to one Claims 2 to 7, **characterized in that** the central longitudinal axes (46) of the thread, of the second supporting element part (14) and of the recesses (48, 50) in the first supporting element part (12) are arranged substantially coaxial relative to one another.

9. Supporting element according to one of the preceding claims, **characterized in that** the second supporting element part (12) has a polygonal outer contour, in particular a substantially block-like outer contour, and **in that** the first supporting element part (12) is designed cup-like and the recesses (48, 50) arranged therein are in each case designed substantially block-like and arranged in a cross shape.

10. Supporting element according to Claim 9, **characterized in that** the second supporting element part (14) has a cross-like outer contour, where a first wing pair (66) comprising opposite wings of this cross shape is considerably shorter than a second wing pair (64), and **in that** at least one of the recesses (48, 50) in the first supporting element part (12) is adapted to the cross shape.

11. Supporting element according to one of the preceding claims, **characterized in that** the first supporting element part (12) has a substantially cross-like outer contour.

12. Supporting element according to one of Claims 2 to 11, **characterized in that** the third supporting element part (16) is a countersunk head bolt.

13. Duct having a basic element channel-shaped in cross-section and a cover element (18) covering the channel-shaped basic element, **characterized by** at least one supporting element (10) according to at least one of the preceding claims.

## Revendications

1. Élément support, en particulier pour soutenir des éléments de recouvrement dans les zones médianes (20) de tunnels de câbles affleurant la chape, constitué d'au moins une première partie d'élément support (12) et une deuxième partie d'élément support (14), sachant que la première partie d'élément support (12) présente au moins deux évidements (48, 50), dans lesquels la deuxième partie d'élément support (14) peut être respectivement emboîtée au moins partiellement, que lors du positionnement de la deuxième partie d'élément support (14) dans un premier des évidements (48), l'élément support (10) présente une première longueur totale L1 et une deuxième longueur totale L2 lors du positionnement de la deuxième partie d'élément support (14) dans un deuxième des évidements (50), **caractérisé en ce que** la deuxième partie d'élément support (14) présente un contour extérieur qui n'est pas circulaire, et que les évidements (48, 50) dans la première partie d'élément support (12) présentent un contour intérieur adapté au contour extérieur de manière telle qu'avec son contour extérieur, la deuxième partie d'élément support (14) s'appuie au moins partiellement sur le contour intérieur de la première partie d'élément support (12).

2. Élément support selon la revendication 1, **caractérisé en ce qu'**au moins la première ou la deuxième partie d'élément support (12, 14) présente un filet destiné à s'engager dans un filet d'une troisième partie d'élément support (16), sachant que l'axe de filet (46) de la première ou de la deuxième partie d'élément support (12, 14) est pour l'essentiel orienté parallèlement à la direction d'emboîtement de la deuxième partie d'élément support (14) dans la première partie d'élément support (12).

3. Élément support selon l'une des revendications précédentes, **caractérisé en ce que** les axes médians longitudinaux (46) des au moins deux évidements (48, 50) dans la première partie d'élément support (12) sont coaxiaux.

4. Élément support selon l'une des revendications précédentes, **caractérisé en ce qu'**au moins deux évidements (48, 50) forment une zone d'ouverture commune dans un contour extérieur de la première partie d'élément support (12), les évidements (48, 50) présentant entre eux un écart angulaire autour de leurs axes médians longitudinaux (46).

5. Élément support selon la revendication 4, **caractérisé en ce que** les évidements (48, 50) présentent entre eux un écart angulaire compris entre 5° et 175°, en particulier égal à 90°.

6. Élément support selon l'une des revendications précédentes, **caractérisé en ce que** la deuxième partie d'élément support (14) présente un filet intérieur (40) et que la première partie d'élément support (12) est formée comme partie supérieure pour s'appuyer sur un élément de recouvrement (18) à soutenir et/ou comme partie inférieure pour reposer sur un sol.

7. Élément support selon l'une des revendications 2 à 6, **caractérisé en ce que** la troisième partie d'élément support (16) est formée comme partie inférieure pour reposer sur un sol et/ou comme partie supérieure pour s'appuyer sur l'élément de recouvrement (18).

8. Élément support selon l'une des revendications 2 à 7, **caractérisé en ce que** les axes médians longitudinaux (46) des filets, des deuxièmes parties d'élément support (16) et des évidements (48, 50) dans la première partie d'élément support (12) sont coaxiaux pour l'essentiel.

9. Élément support selon l'une des revendications précédentes, **caractérisé en ce que** la deuxième partie d'élément support (12) présente un contour extérieur polygonal, en particulier un contour extérieur parallélépipédique pour l'essentiel, et que la première partie d'élément support (12) a une forme de godet et que les évidements (48, 50) qui y sont pratiqués sont respectivement parallélépipédiques pour l'essentiel et disposés en croix.

10. Élément support selon la revendication 9, **caractérisé en ce que** la deuxième partie d'élément support (14) présente un contour extérieur cruciforme, sachant qu'une première paire de branches (66) constituée de branches opposées de cette croix est nettement plus courte qu'une deuxième paire de branches (64), et qu'au moins un des évidements (48, 50) dans la première partie d'élément support (12) est adapté à la croix.

11. Élément support selon l'une des revendications précédentes, **caractérisé en ce que** la première partie d'élément support (12) présente un contour extérieur cruciforme pour l'essentiel.

12. Élément support selon l'une des revendications 2 à 11, **caractérisé en ce que** la troisième partie d'élément support (16) est un boulon à tête conique.

13. Tunnel de câbles avec un corps de base en forme de goulotte dans sa section transversale et un élément de recouvrement (18) recouvrant le corps de base en forme de goulotte, **caractérisé par** au moins un élément support (10) selon au moins l'une des revendications précédentes.
